# EUROPÄISCHE PATENTSCHRIFT

(11) **EP 1 247 784 B1**
(45) Veröffentlichungstag und Bekanntmachung des Hinweises auf die Patenterteilung: **27.09.2006**
(21) Anmeldenummer: 02007035.5
(22) Anmeldetag: 27.03.2002
(51) Int. Cl.: C04B 35/043, C04B 35/44

(54) **Synthetisches, feuerfestes Material für feuerfeste Produkte sowie Verfahren zur Herstellung des Produkts**
Synthethic refractory material for refractory products and process for manufacturing the product
Matériau réfractaire synthethique pour produits réfractaires et procédé de fabrication de ce produit

(30) Priorität: 05.04.2001 DE 10117029
(43) Veröffentlichungstag der Anmeldung: 09.10.2002
(73) Patentinhaber: Refratechnik Holding GmbH, 85737 Ismaning (DE)
(72) Erfinder: Bartha, Peter, Dr., 37120 Bovenden (DE); Klischat, Hans-Jürgen, Dr., 37130 Gleichen (DE); Wirsing, Holger, 37083 Göttingen (DE); Weibel, Guido, 37127 Scheden (DE)
(74) Vertreter: Patentanwälte Dr. Solf & Zapf

(56) Entgegenhaltungen:
- DE-A- 4 403 869
- US-A- 4 400 431

## Beschreibung

Die Erfindung betrifft ein synthetisches, feuerfestes Material für feuerfeste Produkte.

Als Resistor wird nachfolgend ein Material bezeichnet, welches die Hauptkomponente eines feuerfesten Produkts ist. Dieser Resistor kann im allgemeinsten Fall ein metalloxidisches, mineralisches, feuerfestes Material wie MgO, Al₂O₃, Doloma oder ähnliches sein.

Als Elastifizierer werden nachfolgend mineralische, elastifizierende Materialien bezeichnet, die eine relativ hohe Feuerfestigkeit aufweisen und aufgrund einer zum Resistor unterschiedlichen Temperaturdehnung und die dadurch verursachten Gefügestörungen, wie z.B. Mikrorisse, insbesondere entlang der Korngrenzen, und weiterer Effekte zu einer Erhöhung der Temperaturwechselbeständigkeit einer Mischung aus Resistor und Elastifizierer - im Gegensatz zum reinen Resistor - führen.

Feuerfeste Produkte, insbesondere basische feuerfeste Produkte auf der Basis von Magnesia, Doloma, Chromit und/oder Spinell (MgAl₂O₄) werden bei allen Hochtemperaturprozessen mit basischem Schlackenangriff wie z.B. bei der Zement-, Kalk-, Dolomit-, Eisen- und Stahlerzeugung sowie bei der Nichteisenmetallerzeugung und in der Glasindustrie als Auskleidungsmaterial für Öfen, Gefäße und Behandlungsaggregate verwendet. Bei hoher Feuerfestigkeit und guter chemischer Beständigkeit weisen diese Materialien bzw. Formköper jedoch eine hohe Sprödigkeit, d.h. einen hohen Elastizitätsmodul auf, woraus hinsichtlich der Wärmedehnung, Spannungen, mechanischer Beanspruchung und der Temperatur wechselbeständigkeit (TWB) negative Einflüsse auf die Lebensdauer resultieren.

Darüber hinaus ist es bekannt, feuerfeste Formkörper auch auf Basis Al₂O₃ herzustellen, wobei als Rohstoff hier insbesondere Bauxit, Tabulartonerde oder Schmelzkorund eingesetzt werden. Hauptanwendungsgebiete für derartige Steine sind Elektroofendeckel und Pfannen in der Stahlindustrie sowie Zementöfen und die Öfen der Glasindustrie.

Es ist bekannt, die hohen Wärmedehnungsspannungen basischer Feuerfestprodukte bzw. Formkörper durch Verlegen der Feuerfeststeine mit einer dazwischen angeordneten Mörtelfugen, metallischen Einlagen, wie Blechen, Lochblechen oder Netzen zu reduzieren.

Ferner wurden zur Verbesserung der Temperaturwechselbeständigkeit, insbesondere auch basischer feuerfester Materialien in der Vergangenheit zahlreiche Maßnahmen ergriffen. Aus Harders/Kienow, Feuerfestkunde, Herstellung, Eigenschaften und Verwendung feuerfester Baustoffe, Springer Verlag 1960, Kapitel 5.5, Seite 754 und 755 ist es bekannt, die Temperaturwechselbeständigkeit durch den Zusatz von Chromerz (Chrommagnesiastein) und durch eine sogenannte Mischungslücke, d.h. die Minimierung des Mittelkornanteils (0,2 bis 0,6 mm), deutlich zu verbessern. Ein entscheidender Nachteil der Mischungslücke ist jedoch einerseits, daß ihre Wirkung nur in Verbindung mit einer TWB-Komponente wie z.B. Magnesia in Chrommagnesiasteinen bzw. Chromerz in Magnesiachromsteinen ausreichend hoch ist, wenn sich andererseits bei Anwendung der Mischungslücke auch keine optimale Kornpackungsdichte erreichen läßt, wie sie zum Erreichen eines hohen Infiltrationswiderstandes gegenüber Schlacken erwünscht ist. Weiterhin ist bezüglich des Zusatzes von Chromerz (z.B. Harders/Kienow, Seite 754), die Chromerzmenge und die optimale Kornfraktion des Chromerzes definiert worden. Um eine ausreichende TWB zu erlangen, sind dabei Chromerzmengen zwischen 15 und 30 Gew.-% als geeignet erkannt worden. Die elastifizierende Wirkung des Chromerzes in Formkörpern auf Basis Magnesia war bislang unerreicht. Entscheidende Nachteile der Anwendung von Chromerz als Elastifizierer (TWB-Komponente) sind jedoch, daß bei einem Wechsel der Ofenatmosphäre Materialermüdungen stattfinden und daß durch Oxidation unter der Wirkung von Alkalien das im Chromerz dreiwertig vorliegende Chromoxid in toxisches sechswertiges Chromoxid überführt wird, mit allen damit unter arbeitshygienischen und entsorgungstechnischen Gesichtspunkten verbunden Problemen.

Aus der AT-PS 158208 ist es bekannt, Magnesiasteinen zur Verbesserung der TWB Tonerdepulver, Korund und Aluminiumpulver zuzusetzen, wobei beim Steinbrand in situ Spinell (MgO-Al₂O₃) gebildet wird. Der dabei gebildete Spinell ist im Matrixmaterial, welches die Resistorkörner umgibt, konzentriert und zum Teil nicht ausreagiert, so daß beim Angriff solcher Steine durch Schlacken bevorzugt die für die Festigkeit entscheidende Matrix zerstört wird. Darüber hinaus ist die erzielbare TWB-Verbesserung begrenzt, da der für eine entscheidende Verbesserung notwendige Anteil an Al₂O₃ bei weit über 8 Gew.-% liegen müßte. Dies ist wegen des zu starken Wachsens der Steine infolge Volumenvergrößerung in der Matrix jedoch nicht möglich, da ansonsten Maßhaltigkeit und mechanische Festigkeit zu niedrig und die Porosität zu hoch werden.

Eine erhebliche Verbesserung sowohl der TWB als auch der chemischen Beständigkeit von Magnesiasteinen konnte durch Hinzusetzen von vorsynthetisiertem Magnesium-Aluminiumspinell in Form von Sinter oder Schmelzspinell erreicht werden, wobei die üblichen Zusatzmengen zwischen 15 und 25 Gew-% liegen.

Ferner ist aus der DE 44 03 869 C1 ein feuerfester keramischer Versatz bekannt, der als Träger der Feuerfestigkeit im wesentlichen MgO-Sinter enthält, wobei als Elastifizierer ein Spinell vom Hercynittyp eingesetzt wird. Dieser besitzt jedoch nur eine mangelhafte Resistenz gegen basische Schlacken.

Aufgabe der Erfindung ist es, ein synthetisches, feuerfestes Material für ein feuerfestes Produkt zu schaffen, welches das Produkt zuverlässig elastifiziert und das eine erhöhte Korrosionsbeständigkeit gegen insbesondere basische Verbindungen besitzt.

Die Aufgabe wird durch ein Material mit den Merkmalen des Anspruch 1 gelöst.

Eine weitere Aufgabe der Erfindung ist es, ein Verfahren zum Herstellen eines Produkts unter Verwendung des Materials zu schaffen.

Diese Aufgabe wird mit einem Verfahren mit den Merkmalen des Anspruch 5 gelöst.

Vorteilhafte Weiterbildungen werden in den jeweiligen abhängigen Unteransprüchen gekennzeichnet.

Die Erfindung wird anhand einer Zeichnung beispielhaft erläutert, deren einzige Figur das ternäre System FeOₓ, Al₂O, MgO zeigt, wobei in dem ternären System das Zusammensetzungsfeld 1 des erfindungsgemäßen Materials vom Pleonasttyp schraffiert eingezeichnet ist.

Das erfindungsgemäße Material vom Pleonasttyp weist bei einem Gehalt von 20 bis 50% MgO ein Al₂O₃-FeOₓ-Massenverhältnis von 70:30 bis 40:60 auf. Als erfindungsgemäßes Material wird insbesondere auch der Pleaonast selber verwendet. Nach Matthes, S., Mineralogie, Springer Verlag, Berlin Heidelberg New York Tokyo 1983, S. 68, ist Pleonast ein Mischkristall der Zusammensetzung (Mg, Fe²⁺) (Al, Fe³⁺)₂O₄. Die Verhältnis- sowie Prozentangaben beziehen sich im Folgenden stets auf Massenangaben, soweit nicht anders angegeben.

Überraschenderweise wurde gefunden, daß das erfindungsgemäße pleonastische Material bzw. Material vom Pleanasttyp, insbesondere Pleonast selber und insbesondere bei feuerfesten Formkörpern, die als Resistor MgO enthalten, bei einer hohen Elastifizierung des MgO eine signifikante Verbesserung des Korrosionsverhaltens eines aus MgO und Pleonast hergestellten Produkts verursacht. Durch den MgO-Gehalt des Pleonasts von 20 bis 50% MgO nähert sich der Pleonast chemisch und mineralogisch dem Resistor MgO an. Üblicherweise verursacht eine derartige mineralogische und chemische Annäherung zwischen dem als Elastifizierer wirkenden Material und dem Resistor eine Verringerung der Elastifizierung, da sich insbesondere das Wärmedehnungsverhalten des Resistors und des Elastifizierers angleichen. Bei dem erfindungsgemäßen Material Pleonast oder Material vom Pleonasttyp ist die elastifizierende Wirkung des Materials im Vergleich zu einem reinen FeOₓ/Al₂O₃-Spinell überraschenderweise nicht vermindert. Es kann jedoch gegenüber nicht MgO enthaltenden Materialien eine sehr viel höhere chemische Resistenz, insbesondere Korrosionsbeständigkeit gegen basische, insbesondere calciumsilikatische Verbindungen erzielt werden, welche mit vergleichbaren FeOₓ/Al₂O₃-Spinellen nicht erreichbar ist.

Die erhöhte thermochemische Resistenz läßt sich mittels eines Erhitzungsmikroskops nachweisen. Um praxisrelevante Ergebnisse hinsichtlich des Korrosionsverhaltens zu erhalten, wurden Substrate aus Hercynit (FeAl₂O₄) sowie des Materials vom Pleonasttyp, das 20, 35 und 50 % MgO enthielt, hergestellt. Die Herstellung des Pleonastmaterials erfolgt durch Schmelzen in einem Lichtbogenofen bei einer Temperatur von ca. 2000 °C, wobei das pleonastische Material aus den jeweiligen oxidischen Rohstoffen Aluminiumoxid, Eisenoxid und Magnesiumoxid hergestellt wurde. Als Ausgangssubstanzen werden insbesondere Tonerde, Magnetit und kaustische Magnesia verwendet. Nach dem Abkühlen wurden aus dem pleonastischen Material Substrate mit Abmessungen von 10 x 10 x 3 mm geschnitten und deren Verhalten gegenüber calciumsilikatischen Verbindungen untersucht. Als Referenzsubstanz für calciumsilikatische Verbindungen,die auch in der Stahlindustrie als Schlacken auftreten können, wurden verschiedene Zementklinker, nämlich Portlandzementklinker, Weißzementklinker und Klinker eines sulfatbeständigen Zementes verwendet.

Auf die Substrate wird ein geformter Probezylinder mit einer Höhe von 3 mm und einem Durchmesser von 3 mm, jeweils aus Portlandzementklinker, Weißzementklinker oder Klinker eines sulfatbeständigen Zementes, gestellt und in das Erhitzungsmikroskop eingebracht. Dieses wird aufgeheizt, bis es zu einer Korrosion des Substrates durch den Zementklinker kommt. Die Korrosionstemperatur entspricht dem ersten Auftreten einer Reaktion oder Schmelze im Zwickel zwischen Substrat und Zementklinker. In der folgenden Tabelle sind die entsprechenden Werte aufgelistet:

**Tabelle 1: Abhängigkeit der Korrosionstemperatur von Hercynit bzw. Pleonast vom Gehalt an MgO**

| | sulfatbeständiger Zement | Portlandzement | Weißzement |
|---|---|---|---|
| Hercynit (0 % MgO) | 1370 °C | 1305 °C | 1360 °C |
| Pleonast (20 % MgO) | 1405 °C | 1350 °C | 1400 °C |
| Pleonast (35 % MgO) | 1420 °C | 1380 °C | 1415 °C |
| Pleonast (50 % MgO) | 1470 °C | 1400 °C | 1450 °C |

Der Tabelle kann entnommen werden, daß mit zunehmendem Gehalt an MgO im Pleonastmaterial die Korrosionstemperatur drastisch ansteigt und Werte erreichen kann, die um bis zu 100 °C höher liegen als die Korrosionstemperatur bei Hercynit. Da die Korrosionstemperatur des Pleonastmaterials mit zunehmendem MgO-Gehalt ansteigt, ist auch ein Formkörper, der den derartiges Material enthält, deutlich korrosionsbeständiger als ein Formkörper, welcher Hercynit enthält.

Die elastifizierende Wirkung des erfindungsgemäßen, korrosionsbeständigen Materials wird anhand des folgenden Beispiels erläutert:

Magnesia mit einem Maximalkorn von 4 mm und einer Kornverteilung entsprechend einer typischen Fullerkurve wird mit 15 % Pleonast vermischt und mit der erforderlichen Menge an Ligninsulfonat als temporärem Binder versetzt. Anschließend wird der so erhaltene Versatz mit einem spezifischen Preßdruck von 130 MPa verpreßt. Nach der Trockung wird der Formkörper bei einer Sintertemperatur von 1450 °C gebrannt.

Die erreichten Eigenschaften sind in der nachfolgenden Tabelle 2 aufgeführt.

**Tabelle 2**

| | Magnesiastein | Magnesiachromitstein | Magnesiaspinellstein | Magnesiapleonast (mit 20% MgO im Pleonast) | Magnesiapleonast (mit 35% MgO im Pleonast) | Magnesiapleonast (mit 50% MgO im Pleonast) |
|---|---|---|---|---|---|---|
| Rohdichte / g/cm³ | 2,93 | 2,94 | 2,92 | 2,93 | 2,91 | 2,92 |
| Porosität / % | 16,7 | 16,8 | 16,6 | 17,1 | 17,4 | 16,9 |
| E-Modul / GPa | 81,6 | 27,4 | 25,3 | 25,1 | 26,8 | 28,6 |
| Kaltdruckfestigkeit / MPa | 83,0 | 72,3 | 68,1 | 69,5 | 60,6 | 75,4 |
| TWB | 8 | > 100 | > 100 | > 100 | > 100 | > 100 |
| DE: T0 / °C | 1600 | 1550 | 1504 | 1504 | 1510 | 1551 |

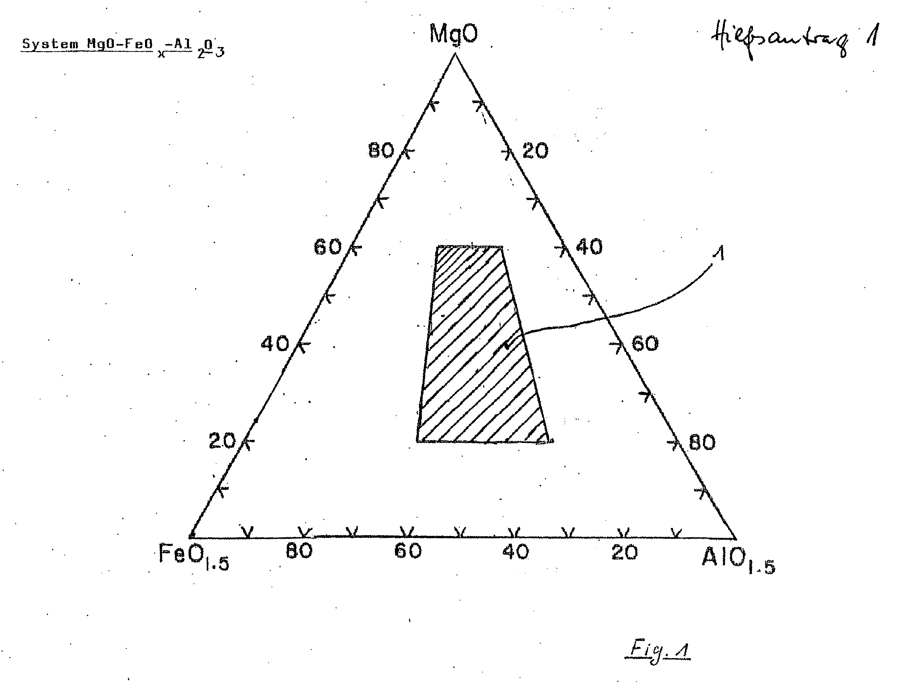

In der Tabelle sind ein Vergleichsstein aus Magnesia, welcher kein erfindungsgemäßes Material enthält, ein Magnesiachromitstein, welcher Chromerz als Elastifizierer enthält, und ein Magnesiaspinellstein, welcher Magnesiumaluminiumspinell als Elastifizierer enthält, erfindungsgemäßen Magnesiapleonastformkörpern gegenübergestellt, wobei das erfindungsgemäße Pleonastmaterial 20, 35 und 50 % MgO aufweist. Der T₀-Wert wird nach DIN 51 053, Blatt 1, ermittelt und ist die Temperatur, bei der die maximale Dehnung Dₘₐₓ auftritt. Es handelt sich demnach um die Temperatur mit dem Maximum der Höhenänderungs-Temperatur-Kurve in Bild 1 der DIN 51 053.

Man erkennt gegenüber dem Magnesiastein, daß der E-Modul durch den Zusatz des erfindungsgemäßen Materials sehr wirksam in einen Bereich gesenkt werden kann, der dem des Magnesiachromitsteins entspricht. Die Werte sind bei einem Pleonast mit 20 % MgO-Anteil sogar etwas besser als bei einem Magnesiaspinellstein. Bemerkenswert ist, daß bei einer sehr hohen Kaltdruckfestigkeit von 75 MPa bei einem Magnesiapleonaststein mit 50 % MgO im Pleonastmaterial eine hohe Temperaturwechselbeständigkeit bei einem relativ niedrigen E-Modul erreicht werden kann. Ferner kann mit einem derartigen Magnesiapleonaststein ein guter T₀-Wert bei der Druckerweichenprüfung erzielt werden, wobei gleichzeitig die schon in Tabelle 1 dargestellte, sehr hohe Korrosionsfestigkeit erzielt wird.

Selbstverständlich können die elastischen Moduli der Formkörper durch Variation des Materialzusatzes des erfindungsgemäßen Pleonastmaterials bzw. pleonastischen Materials in unterschiedlichen, den jeweiligen Erfordernissen angepaßten Grenzen variiert werden. Weiterhin ist der Zusatz an Pleonast zu Magnesiasintern unterschiedlicher Provenienz möglich. Ferner können mit dem erfindungsgemäßen Elastifizierer Pleonast auch Schmelzmagnesia oder Formkörper mit gänzlich anderen Resistoren elastifiziert werden.

Ferner kann das Material als Elastifizierer in Form eines Gemenges aus dem pleonastischen Material und anderen bekannten Elastifizierern, insbesondere Magnesium-Aluminium-Spinell verwendet werden.

Bei dem erfindungsgemäßen Material und Produkten hieraus ist von Vorteil, daß bei gleicher Elastifizierungsleistung wie bei herkömmlichen Elastifizierern eine erheblich stärkere Korrosionsresistenz, insbesondere gegenüber basischen Schlacken, erzielt wird. Ferner ist von Vorteil, daß insbesondere Resistoren auf Basis Periklas (MgO) von dem erfindungsgemäßen, pleonastischen Material nicht in der Weise durch Diffusion im Gefüge angegriffen werden, wie das beispielsweise bei der Verwendung von Hercynit der Fall ist.

## Patentansprüche

1. Verwendung eines Materials, das ein Pleonast und/oder ein Spinell vom Pleonasttyp ist, der neben FeOₓ und Al₂O₃ MgO aufweist, wobei das Massenverhältnis des Eisens gerechnet als Fe₂O₃ : Al₂O₃ von 30 : 70 bis 60 : 40 reicht und 20 bis 60 Masse-% MgO, bezogen auf Fe₂O₃ + Al₂O₃ + MgO enthalten sind, als Elastifizierer in feuerfesten Formkörpern oder Massen.

2. Verwendung nach Anspruch 1,
**dadurch gekennzeichnet,**
**daß** ein aus den Rohstoffen Magnesia, Tonerde und Eisenverbindungen, insbesondere Eisenoxid, wie Magnetit, erschmolzener, synthetischer Spinell vom Pleonasttyp verwendet wird.

3. Verwendung nach Anspruch 1,
**dadurch gekennzeichnet,**
**daß** ein aus den Rohstoffen Magnesia, Tonerde und Magnetit gesinterter synthetischer Spinell vom Pleonasttyp verwendet wird.

4. Verwendung nach einem oder mehreren der vorhergehenden Ansprüche,
**dadurch gekennzeichnet,**
**daß** zur Steuerung der Korrosionstemperatur der feuerfesten Formkörper oder Massen ein Material verwendet wird, dessen MgO-Gehalt in den angegebenen Grenzen, auf Kosten von Fe₂O₃ und Al₂O₃, erhöht enthalten ist.

5. Verwendung nach einem oder mehreren der vorhergehenden Ansprüche,
**dadurch gekennzeichnet,**
**daß** das Material als Elastifizierer in Form eines Gemenges mit anderen bekannten Elastifizierern, insbesondere Magnesium-Aluminium-Spinell verwendet wird.

6. Feuerfestes Produkt, insbesondere Formkörper oder Masse, aufweisend einen Resistor als Träger der Feuerfestigkeit und einen Elastifizierer zu einer Erhöhung der Temperaturwechselbeständigkeit
**dadurch gekennzeichnet,**
**daß** es als Elastifizierer ein Material mit den Produktmerkmalen gemäß einem oder mehreren der Ansprüche 1 bis 5 aufweist.

7. Produkt nach Anspruch 6,
**dadurch gekennzeichnet,**
**daß** es als Resistor eine feuerfeste, mineralische, metalloxidische Hauptkomponente enthält.

8. Produkt nach Anspruch 6 und/oder 7,
**dadurch gekennzeichnet,**
**daß** der Resistor MgO enthält.

9. Produkt nach einem oder mehreren der Ansprüche 6 bis 8
**dadurch gekennzeichnet,**
**daß** der Resistor Al₂O₃ oder Doloma enthält.

10. Produkt nach einem oder mehreren der Ansprüche 6 bis 9,
**dadurch gekennzeichnet,**
**daß** der Resistor Schmelzmagnesia und/oder Sintermagnesia ist.

11. Produkt nach einem oder mehreren der Ansprüche 6 bis 10,
**dadurch gekennzeichnet,**
**daß** es ein Gemenge aus dem Pleonast und/oder Spinell vom Pleonasttyp und anderen bekannten Elastifizierern, insbesondere Magnesium-Aluminium-Spinell, enthält.

12. Produkt nach einem oder mehreren der Ansprüche 6 bis 11,
**dadurch gekennzeichnet,**
**daß** es einen temporären Binder enthält.

13. Produkt nach einem oder mehreren der Ansprüche 6 bis 12,
**dadurch gekennzeichnet,**
**daß** der Binder Ligninsulfonat enthält.

14. Produkt nach einem oder mehreren der Ansprüche 6 bis 11,
**dadurch gekennzeichnet,**
**daß** es bei einer Sintertemperatur von > 1000° C, insbesondere 1200 bis 1700, vorzugsweise 1350 bis 1600° C gebrannt ist.

15. Verfahren zum Herstellen eines feuerfesten Produkts, insbesondere eines Formkörpers oder Masse nach einem oder mehreren der Ansprüche 6 bis 14 mit einem Material mit den Produktmerkmalen nach einem oder mehreren der Ansprüche 1 bis 5,
**dadurch gekennzeichnet,**
**daß** das Material als erstarrtes Schmelzprodukt oder als Sinterprodukt zerkleinert und in Körnungen klassiert aufbereitet wird, wobei das Material mit einer feuerfesten, mineralischen, metalloxidischen Hauptkomponente (Resistor) vermischt wird.

16. Verfahren nach Anspruch 15,
**dadurch gekennzeichnet,**
**daß** das Material in Form eines Gemenges mit anderen bekannten Elastifizierern, insbesondere Magnesium-Aluminium-Spinell, vermischt wird.

17. Verfahren nach Anspruch 15 und/oder 16,
**dadurch gekennzeichnet,**
**daß** als Hauptkomponente ein Resistor verwendet wird, der MgO enthält.

18. Verfahren nach einem oder mehreren der Ansprüche 15 bis 17,
**dadurch gekennzeichnet,**
**daß** ein Resistor verwendet wird, der Al₂O₃ oder Doloma enthält.

19. Verfahren nach einem oder mehreren der Ansprüche 15 bis 18,
**dadurch gekennzeichnet,**
**daß** als Resistor Schmelzmagnesia und/oder Sintermagnesia verwendet wird.

20. Verfahren nach einem oder mehreren der Ansprüche 15 bis 19,
**dadurch gekennzeichnet,**
**daß** der Resistor mit einem Maximalkorn von 4 mm und einer Kornverteilung entsprechend einer typischen Fullerkurve vorgelegt und mit 3 bis 50 %, insbesondere 5 bis 20 %, bevorzugt 8 bis 16 % des Materials vermischt und gegebenenfalls mit der erforderlichen Menge an einem temporären Binder, z.B. mit Ligninsulfonat, versetzt wird.

21. Verfahren nach einem oder mehreren der Ansprüche 15 bis 20,
**dadurch gekennzeichnet,**
**daß** der Versatz aus Resistor, Elastifizierer und gegebenenfalls temporärem Binder bei einem spezifischen Preßdruck von >50 MPa, insbesondere 100 bis 200 MPa, verpreßt wird.

22. Verfahren nach einem oder mehreren der Ansprüche 15 bis 21,
**dadurch gekennzeichnet,**
**daß** der Formkörper getrocknet wird.

23. Verfahren nach einem oder mehreren der Ansprüche 15 bis 22,
**dadurch gekennzeichnet,**
**daß** der Formkörper bei einer Sintertemperatur von >1000 °C, insbesondere 1200 bis 1700°C, vorzugsweise 1350 und 1600°C gebrannt wird.

## Claims

1. Use of a material, which is a pleonaste and/or a spinel of the pleonaste type which contains MgO in addition to FeOₓ and Al₂O₃, wherein the mass ratio of the iron calculated as Fe₂O₃:Al₂O₃ ranges from 30:70 to 60:40 and the material contains 20% to 60% by mass of MgO based on Fe₂O₃ + Al₂O₃ + MgO, as an elasticiser in refractory mouldings or substances.

2. Use according to claim 1, **characterised in that** a synthetic spinel of the pleonaste type is used, which is fused from the raw materials magnesia, alumina and iron compounds, especially iron oxide, such as magnetite.

3. Use according to claim 1, **characterised in that** a synthetic spinel of the pleonaste type is used, which is sintered from the raw materials magnesia, alumina and magnetite.

4. Use according to one or more of the preceding claims, **characterised in that**, to control the corrosion temperature of the refractory mouldings or substances, a material is used which has a MgO content which is increased within the stated limits at the expense of Fe₂O₃ and Al₂O₃.

5. Use according to one or more of the preceding claims, **characterised in that** the material is used as an elasticiser in the form of a mixture with other known elasticisers, especially magnesium aluminium spinel.

6. A refractory product, especially a moulding or substance, containing a resistor as a carrier for the refractory quality and an elasticiser for increasing the thermal-shock resistance, **characterised in that** it contains, as an elasticiser, a material with the product features according to one or more of claims 1 to 5.

7. A product according to claim 6, **characterised in that** it contains a refractory, mineral, metal-oxide main component as a resistor.

8. A product according to claim 6 and/or 7, **characterised in that** the resistor contains MgO.

9. A product according to one or more of claims 6 to 8, **characterised in that** the resistor contains Al₂O₃ or doloma.

10. A product according to one or more of claims 6 to 9, **characterised in that** the resistor is fused magnesia and/or sintered magnesia.

11. A product according to one or more of claims 6 to 10, **characterised in that** it contains a mixture of the pleonaste and/or spinel of the pleonaste type and other known elasticisers, especially magnesium aluminium spinel.

12. A product according to one or more of claims 6 to 11, **characterised in that** it contains a temporary binder.

13. A product according to one or more of claims 6 to 12, **characterised in that** the binder contains lignin sulphonate.

14. A product according to one or more of claims 6 to 11, **characterised in that** it is fired at a sintering temperature of >1000°C, especially 1200°C to 1700°C, preferably 1350°C to 1600°C.

15. A method of manufacturing a refractory product, especially a moulding or substance, according to one or more of claims 6 to 14 using a material with the product features according to one or more of claims 1 to 5, **characterised in that** the material in the form of a solidified fused product or a sintered product is prepared by being comminuted and classified into grain sizes, wherein the material is mixed with a refractory, mineral, metal-oxide main component (resistor).

16. A method according to claim 15, **characterised in that** the material in the form of a mixture is mixed with other known elasticisers, especially magnesium aluminium spinel.

17. A method according to claim 15 and/or 16, **characterised in that** a resistor containing MgO is used as a main component.

18. A method according to one or more of claims 15 to 17, **characterised in that** a resistor containing Al₂O₃ or doloma is used.

19. A method according to one or more of claims 15 to 18, **characterised in that** fused magnesia and/or sintered magnesia is used as a resistor.

20. A method according to one or more of claims 15 to 19, **characterised in that** the resistor is provided with a maximum grain size of 4 mm and a grain-size distribution corresponding to a typical Fuller curve and mixed with 3% to 50%, especially 5% to 20%, preferably 8% to 16% of the material and, optionally, mixed with the necessary amount of a temporary binder, e.g. lignin sulphonate.

21. A method according to one or more of claims 15 to 20, **characterised in that** the mixture comprising a resistor, elasticiser and, optionally, a temporary binder is compacted at a specific compacting pressure of >50 MPa, especially 100 to 200 MPa.

22. A method according to one or more of claims 15 to 21, **characterised in that** the moulding is dried.

23. A method according to one or more of claims 15 to 22, **characterised in that** the moulding is fired at a sintering temperature of >1000°C, especially 1200°C to 1700°C, preferably 1350°C and [sic] 1600°C.

## Revendications

1. Utilisation d'un matériau, qui est un pléonaste et/ou un spinelle du type pléonaste, qui, à côté de FeOₓ et de Al₂O₃, comprend du MgO, sachant que le rapport massique du fer, compté comme Fe₂O₃ : Al₂O₃, va de 30 : 70 à 60 : 40 et que 20 à 60 % en masse de MgO, rapportés à Fe₂O₃ + Al₂O₃ + MgO sont contenus, comme élastifiant dans des pièces moulées ou des masses réfractaires.

2. Utilisation selon la revendication 1,
**caractérisée en ce**
**qu'**un spinelle fondu synthétique du type pléonaste en les matières premières magnésie, argile et des composés du fer, en particulier des oxydes de fer comme la magnétite, est utilisé.

3. Utilisation selon la revendication 1,
**caractérisée en ce**
**qu'**un spinelle fritté synthétique du type pléonaste, en les matières premières magnésie, argile et magnétite, est utilisé.

4. Utilisation selon l'une ou plusieurs des revendications précédentes,
**caractérisée en ce que**,
pour la commande de la température de corrosion des corps moulés ou des masses réfractaires, on utilise un matériau dont la teneur en MgO contenue est accrue dans les limites fixées, au détriment de Fe₂O₃ et de Al₂O₃.

5. Utilisation selon l'une ou plusieurs des revendications précédentes,
**caractérisée en ce que**
le matériau est utilisé comme élastifiant sous forme d'une dispersion avec d'autres élastifiants connu, en particulier du spinelle magnésium-aluminium.

6. Produit réfractaire, en particulier corps moulé ou masse comportant un élément résistant comme porteur du caractère réfractaire et un élastifiant pour accroître la résistance aux changements de température,
**caractérisé en ce**
**qu'**il comporte comme élastifiant un matériau avec les caractéristiques de produit selon l'une ou plusieurs des revendications 1 à 5.

7. Produit selon la revendication 6,
**caractérisé en ce**
**qu'**il contient comme élément résistant un composant principal réfractaire minéral, à base d'oxyde métallique.

8. Produit selon la revendication 6 et/ou 7,
**caractérisé en ce que**
le élément résistant contient du MgO.

9. Produit selon l'une ou plusieurs des revendications 6 à 8
**caractérisé en ce que**
le élément résistant contient du Al₂O₃ ou du doloma.

10. Produit selon l'une ou plusieurs des revendications 6 à 9,
**caractérisé en ce que**
le élément résistant est de la magnésie fondue et / ou de la magnésie frittée.

11. Produit selon l'une ou plusieurs des revendications 6 à 10,
**caractérisé en ce**
**qu'**il contient un mélange du pléonaste et/ou du spinelle de type pléonaste, et d'autres élastifiants connus, en particulier un spinelle magnésium-aluminium.

12. Produit selon l'une ou plusieurs des revendications 6 à 11,
**caractérisé en ce**
**qu'**il contient un liant temporaire.

13. Produit selon l'une ou plusieurs des revendications 6 à 12,
**caractérisé en ce**
**que** le liant contient du sulfonate de lignine.

14. Produit selon l'une ou plusieurs des revendications 6 à 11,
**caractérisé en ce**
**qu'**il est cuit à une température de frittage de > 1000 °C, en particulier de 1200 à 1700, de préférence de 1350 à 1600 °C.

15. Procédé pour la préparation d'un produit réfractaire, en particulier d'un corps moulé ou d'une masse selon l'une ou plusieurs des revendications 6 à 14, avec un matériau ayant les caractéristiques de produit selon l'une ou plusieurs des revendications 1 à 5,
**caractérisé en ce**
**que** le matériau est fragmenté comme produit fondu ou comme produit fritté et est traité, classé en granulométries, lors de quoi le matériau est mélangé à un composant principal (élément résistant) réfractaire minéral à base d'oxyde métallique.

16. Procédé selon la revendication 15,
**caractérisé en ce que**
le matériau est mélangé sous forme d'une dispersion avec d'autres élastifiants connus, en particulier du spinelle magnésium-aluminium.

17. Procédé selon la revendication 15 et/ou 16,
**caractérisé en ce que**
comme composant principal est employé un élément résistant qui contient du MgO.

18. Procédé selon l'une ou plusieurs des revendications 15 à 17,
**caractérisé en ce**
**qu'**un élément résistant qui contient de l'Al₂O₃ ou du doloma est employé.

19. Procédé selon l'une ou plusieurs des revendications 15 à 18,
**caractérisé en ce que**
comme élément résistant est employée de la magnésie fondue et/ou de la magnésie frittée.

20. Procédé selon l'une ou plusieurs des revendications 15 à 19,
**caractérisé en ce que**
le élément résistant est fourni avec une taille maximale de grain de 4 mm et une répartition granulométrique typique pour une courbe de Fuller et est mélangé à 3 à 50 %, en particulier 5 à 20 %, de préférence 8 à 16 % du matériau et est doté le cas échéant de la quantité nécessaire d'un liant temporaire, par exemple du sulfonate de lignine.

21. Procédé selon l'une ou plusieurs des revendications 15 à 20,
**caractérisé en ce que**
le mélange de élément résistant, d'élastifiant et, le cas échéant, de liant temporaire, est comprimé à une pression de compression spécifique de >50 MPa en particulier de 100 à 200 MPa.

22. Procédé selon l'une ou plusieurs des revendications 15 à 21,
**caractérisé en ce que**
le corps moulé est séché.

23. Procédé selon l'une ou plusieurs des revendications 15 à 22,
**caractérisé en ce que**
le corps moulé est cuit à une température de frittage de >1000 °C en particulier de 1200 à 1700 °C, de préférence à 1350 et 1600 °C.
